(19) Europäisches Patentamt
European Patent Office
Office européen des brevets

(11) **EP 3 299 353 B1**

(12) **EUROPEAN PATENT SPECIFICATION**

(45) Date of publication and mention
of the grant of the patent:
**15.04.2020 Bulletin 2020/16**

(51) Int Cl.:
**C04B 41/86** (2006.01)      **C03C 8/04** (2006.01)
**B41M 5/00** (2006.01)

(21) Application number: **16020342.8**

(22) Date of filing: **22.09.2016**

(54) **INK COMPOSITION FOR CLEAR GLOSS CERAMIC COATINGS**

TINTENZUSAMMENSETZUNG FÜR KLARGLANZKERAMIKÜBERZUG

ENCRE POUR REVÊTEMENTS CÉRAMIQUES LUSTRANTS TRANSPARENTS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**28.03.2018 Bulletin 2018/13**

(73) Proprietor: **Sociedad Anónima Minera
Catalano-Aragonesa
50001 Zaragoza (ES)**

(72) Inventors:
• **Caballero López, Miguel Ángel
50001 Zaragoza (ES)**
• **Pérez Aparicio, Joaquín Javier
50001 Zaragoza (ES)**
• **Navarro Pérez, Sandra
50001 Zaragoza (ES)**

(74) Representative: **Schäfer, Matthias W.
Patentanwalt
Schwanseestrasse 43
81549 München (DE)**

(56) References cited:
**EP-A1- 2 918 560      US-A1- 2005 158 400**

• JACKSON W M: "Low Firing Glazes and Slips",
AMERICAN CERAMIC SOCIETY BULLETIN,
AMERICAN CERAMIC SOCIETY. COLUMBUS,
US, vol. 68, no. 1, 1 January 1989 (1989-01-01),
pages 87-88, XP008125283, ISSN: 0002-7812

• JACKSON II WILLIAM M: "Unique tile glaze
concept - free of pinholes", CERAMIC
ENGINEERING AND SCIENCE PROCEEDINGS -
95TH ANNUAL MEETING AND THE 1993 FALL
MEETING OF THE MATERIALS & EQUIPMENT
AND WHITEWARES DIVISIONS 1994 JAN-FEBR
AMERICAN CERAMIC SOC, vol. 15, no. 1, January
1994 (1994-01), pages 126-128, XP002767943,

• DATABASE WPI Week 201632 Thomson
Scientific, London, GB; AN 2016-089049
XP002767944, & CN 105 254 281 A (WANG H) 20
January 2016 (2016-01-20)

• DATABASE WPI Week 201604 Thomson
Scientific, London, GB; AN 2015-67532T
XP002767945, & CN 104 944 915 A (SUZHOU
TUOKE EQUIP CO LTD) 30 September 2015
(2015-09-30)

• DATABASE WPI Week 201602 Thomson
Scientific, London, GB; AN 2015-67532S
XP002767946, & CN 104 944 916 A (SUZHOU
TUOKE EQUIP CO LTD) 30 September 2015
(2015-09-30)

• DATABASE WPI Week 201578 Thomson
Scientific, London, GB; AN 2015-61676A
XP002767947, & CN 104 860 644 A (SUZHOU
TUOKE EQUIP CO LTD) 26 August 2015
(2015-08-26)

• DATABASE WPI Week 201571 Thomson
Scientific, London, GB; AN 2015-61674E
XP002767948, & CN 104 860 721 A (QINGDAO
KANGTAIXIN ENVIRONMENTAL PROTECT) 26
August 2015 (2015-08-26)

• DATABASE WPI Week 201505 Thomson
Scientific, London, GB; AN 2015-04829E
XP002767949, & CN 104 140 290 A (QINGDAO
QIANXIANG ENVIRONMENTAL TECHNOLO) 12
November 2014 (2014-11-12)

EP 3 299 353 B1

- **DATABASE WPI Week 201615 Thomson Scientific, London, GB; AN 2015-812681 XP002767950, & CN 105 131 715 A (WANG H) 9 December 2015 (2015-12-09)**

## Description

### Technical area

The present invention comes within the field of materials for the ceramics industry, in particular, glaze inks with a clear gloss effect intended for application by means of injection, also termed "inkjet", within the sector of industrial ceramics, both for ceramic tiles and structural and sanitaryware ceramics, for the purpose of obtaining a clear gloss coating.

### Definitions

Particle size distribution (PSD), either of a powder, a granular product or particles dispersed in a liquid, is a series of values that defines the relative amount, typically by mass or volume, of the particles present, ordered according to their size.

d(v,n), generally expressed as Dn%, is a group of parameters that allows a given PSD to be characterised and it is defined as the equivalent diameter of a particle where an amount n (expressed on a per unit basis), or n% (expressed as a percentage), of the volume of the control sample has an equivalent diameter that is less than the said value. For example, a value of d(v,0.50) = 0.80 $\mu$m, also expressed as D50 = 0.80 $\mu$m would correspond to the median of the PSD, in which 50% of the volume of the control sample would have an equivalent diameter of less than 0.80$\mu$m.

Distribution width, $W_{PSD}$ is a dimensionless value which affords a measurement of the degree of spread of data around the median. It is calculated according to the following expression:

$$W_{PSD} = \frac{d(v, 0.90) - d(v, 0.10)}{d(v, 0.50)} (1)$$

d(v, 0.97), also expressed as D97, is the parameter that is normally used as the upper bound of the PSD of suspensions and powders.

Resolution. In inkjet terminology, this term refers to the definition obtained in printing, that is, the number of dots printed per unit of length, usually expressed in dots per inch (dpi). Most of the printheads used in ceramic decoration have a resolution capacity of between 300 and 400 dpi. Logically, transverse resolution to the print direction or native resolution is fixed (and depends on the printhead used), while longitudinal resolution (i.e. that obtained in the direction of the printing of the piece) can be varied as desired depending on the frequency with which the printhead fires (within the operating range defined by the manufacturer) and the printing speed of the piece (in m/min). Thus, with the same printed dot size, a greater longitudinal resolution implies that a greater weight of ink is applied per surface unit.

Frit. It is an insoluble glassy material, normally presented in the form of flakes or granules, which is obtained by rapidly quenching a melted material prepared with a combination of inorganic chemical substances.

Sintering temperature of a glaze. Sintering is defined as the heat treatment process by which a system of individual particles (or grains) that form a piece or porous body, evolve to a state of maximum compaction and minimum porosity. During this process chemical and physical transformations may take place, with micro-structural changes in the piece, giving rise to the formation of new crystalline or glassy phases. This process depends on several factors, the most important being the temperature of the heat treatment and the reaction time. A characteristic sintering temperature can be established for each raw material composition by determining the contraction curve of a test specimen of material when subjected to heat treatment with a fixed temperature ramp.

### Current State of the Art

Traditionally glazes to obtain glossy coatings on tiles or other ceramic objects, also known (for their use) as ceramic glazes, basically consisted of mixtures of raw materials providing oxides which, in suitable proportions, reacted together during the firing cycles. Due precisely to the need for an appropriate chemical reaction between the raw materials, these "traditional" firing cycles always lasted for a long time, up to 24 hours or even more. However, with the arrival of quick-firing kilns with complete cycles lasting between 25 and 60 minutes, ceramic frits became widely used, because a quick reaction of components was required and this could only be achieved if the raw materials were already fused into a homogenous whole: the frit. Furthermore, the use of frits allows water-soluble raw materials to be employed, such as borates, alkaline carbonates, etc. (which cannot be used directly in aqueous suspensions of glazes) and reduces the toxicity of certain oxides, such as PbO.

There is an almost infinite number of chemical compositions of glazes in which the fundamental oxide is $SiO_2$, characterised by its facility to generate glass in combination with other fluxing oxides. Amongst these, boron oxide, $B_2O_3$

is of particular relevance, being present in practically all of the glazes used for the decoration of ceramic tiles, in cycles with maximum temperatures of 900ºC to 1180 ºC, only not being essential in porcelain stoneware cycles at temperatures of around 1200 ºC or more. Amongst other properties that boron oxide contributes to glazes are:

- Melting point, since it forms low-melting point eutectics.

- Decrease of the thermal expansion coefficient (compared to other fluxes, such as alkaline oxides which increase it), which is essential to achieve a good coupling between the ceramic base and the glaze.

- Increase in elastic properties.

- Decrease in viscosity in melted state.

- Increase in the refraction index.

However, incorporating boron oxide to glazes is not simple due to the fact that, as previously mentioned, some of the raw materials that contain it, such as boric acid or borax, are soluble in water and thus do not function well in the aqueous suspensions of ceramic glazes. Furthermore, other raw materials such as colemanite produce problems of "crackle" or bursting of particles when they undergo heat treatment and therefore cannot be used directly in glazes either. Hence, the use of boron oxide as a component of glazes makes the use of ceramic frits practically essential.

Only in certain cases and for very specific reasons has a special type of borate been used, such as zinc borate which is a crystalline substance with a very low solubility. This is the case of patent US5753685A *"Partially crystallizing enamel containing crystalline zinc borate seed material'* which, in addition to frit, also expressly uses zinc borate as a seed for crystallisation, to obtain a glass for moulding, of a partially crystalline nature, to avoid problems with forming due to adherence to moulds when working with this type of glass.

With regard to the final decoration of tiles or other glazed ceramic objects, the arrival of ink injection digital printing technology just a few years ago caused a revolution in the industry as it is an economical, highly flexible process. So much so in fact that, at the present time, the vast majority of ceramic tiles worldwide are now decorated using a process of printing by injecting pigment inks (that are applied over the glazed pieces), replacing the previous decorating processes by screen printing or rotogravure.

Initially the inks used for the decoration of ceramic products were soluble salts of metal cations dissolved in organic solvents of different types, such as those referred to in EP 1 272 574 "Individual inks and set of inks for use in colour inkjet printing of glazed ceramic articles and surfaces". However, given that the inks have to be applied over unfired glazes, that is to say, these are porous substrates, the use of soluble salts caused a serious problem of printing reproducibility due to the difficulty of controlling the penetration of the inks into the substrate. For this reason, the soluble salts were soon replaced by pigments with an insoluble crystalline structure, prepared in the form of suspensions in solvent media, which are subsequently milled to obtain a particle size distribution (PSD) that is small enough to be used in the printheads that are commonly employed in ceramics.

In general, for most printheads, their specifications (determined by the diameter of the injectors) require the use of inks with a PSD of solids that is limited in terms of its upper limit. Most of the printheads currently used in ink printing for ceramic products limit use to inks with D97 < 1 $\mu$m As well as limiting the upper bound in the PSD of ink suspensions, it is also essential to prevent the formation of an excess of fine grains of pigment in the solid component of inks since, because the specific surface area of the solid varies in a ratio that is inversely proportional to the diameter of the particles, when the specific surface area increases in excess, a re-aggregation of particles may occur. Thus, having inks with a PSD of a very small width value improves their stability over time (by preventing re-aggregation) and allows greater concentrations of solids to be reached.

In the state of the art we find descriptions of diverse procedures related to the printing of pigment inks for the decoration of ceramic products, such as for example in Patent ES 2 131 466 "Automatic procedure for decorating ceramic substrates", which describes, in general terms, the use of the pigment ink injection system in ceramics and also in Patent ES 2 289 916 "Colloidal dispersion of ceramic pigments", which presents in a very general manner, the manufacture of pigment inks for application by injection. These procedures and inks only produce finishes in different colours by injection, but no other type of ceramic effects can be achieved.

Furthermore, the decorating of tiles and other ceramic objects has always been characterised by the richness of the "ceramic effects" obtained with different types of glazes (textures, micro-reliefs, lustres, gloss-matt contrasts, metallic appearance, etc.) and these, as already indicated, were carried out using traditional decorating procedures such as rotogravure or screen printing. It was very tempting to try to also use the new inkjet decorating technology to generate these so-called "ceramic effects", by means of the formulation of inks, in this case, of glazes. Along these lines, obtaining gloss and clear finishes in ceramics using injection inks has been recently associated with the use of frits as fluxes, such as the case described in US patent 2013/0265376 " Inkjet compositions for forming functional glaze coatings", which employs clear frits for the preparation of glaze inks.

Also, in WO 2014/072553 "Digital glaze composition for ink jet", mixtures of raw materials and/or frits with a particle size of less than 1.2 $\mu$m expressed as D100 and less than 1 $\mu$m expressed as D90 are used. This patent mentions, as a specific example, a digital glaze ink that provides a gloss effect which, in the three example embodiments, contains, as the majority inorganic component, frits termed 1 and 2, whose exact chemical composition is not mentioned, although it is indicated that they respectively contain the following elements:

Frit 1: Si, Al, B, Zn, Na, Ca

Frit 2: Si, Al, B, Zn

Furthermore, in the patent a multitude of raw materials are mentioned, although only one of them, colemanite, permits $B_2O_3$ to be added to the clear glaze. However, as previously indicated, there is an intrinsic problem with colemanite in its raw use and this is its tendency towards crackling, i.e., the bursting of particles during heat treatment, which could lead to defects on the surface of the glassy decoration.

What is more, it is difficult to manufacture glaze inks based on frits due to the glassy nature of the frits themselves which, unlike pigments (of a crystalline structure), behave elastically (increasingly so when boron is used in their composition), which complicates their milling, impeding reaching a sufficiently fine PSD for them to be used in many of the printheads commonly used in the manufacture of tiles or other ceramic objects. Indeed, patent WO 2014/072553 itself mentions a value of D90 < 1 $\mu$m, which implies that 10% of the particles are greater than 1 $\mu$m, limiting its use to just a few types of special printheads that allow slightly larger particle sizes. Apart from this limitation, use of glaze inks with a PSD that is somewhat higher than the known pigment inks is compromised by the ensuing increase in settling velocity. Indeed, according to Stokes' law (2), the settling velocity of the particles of a solid with a density $\rho_P$ in a liquid of density $\rho_f$ and viscosity $\eta$ is proportional to the square of the radius (r) of said particles:

$$V_s = \frac{2}{9} \frac{r^2 g (\rho_P - \rho_f)}{\eta} (2)$$

Furthermore, the viscosity of the inks needs to be very low due to the specifications of the manufacturers of ceramic decoration printheads. If we also consider that viscosity decreases considerably with the increase in temperature (which is high during the printing process and can also be high during transport), we can conclude that it is essential to try to ensure an ink PSD that is as low as possible, which is something that is not possible with current gloss inks prepared by milling frits.

For this reason, still pending in the state of the art is the solution of the problem of obtaining glaze inks that afford a glossy appearance to the decoration of tiles or other ceramic objects, overcoming the difficulties associated with the use of frits in the composition of these:

-   Frit milling problems (particle elasticity) which causes lack of reproducibility of characteristics in manufacturing lots.

-   A greater PSD than pigment inks, which reduces their filtering capacity (control parameter specified by printhead manufacturers) and increases their settling velocity, thus reducing stability over time in storage and use.

This present invention proposes an elegant solution which is easy to execute and that solves these problems in the state of the art by achieving the desired glossy effect without the use of products of a glassy nature, such as, for example frits.

Jackson W M, American Ceramic Society Bulletin 68, 87 (1989) describes low firing glazes and slips comprising zinc borate.

## Description of the invention

The present invention refers to an ink having the features of claim 1, the use of a fritless ceramic glaze composition having the features of claim 10 and a manufacturing process having the features of claim 11. Advantageous embodiments are defined in the dependent claims.

Described is a glazing composition that is fritless and hence is carried out by mixing and directly milling the components, which comprises zinc borate as the basic flux, which is used for the manufacture of glaze ink, that, in turn, gives rise to the obtainment of a 100% glassy and homogeneous coating, without the presence of crystallisations, affording properties of gloss and transparency when used in a process of decoration of ceramic objects, which consists of the following phases:

- Conventional glazing of the ceramic product

- Inkjet decoration (by injection of ink) using the glaze ink of the invention.

- Completion with a conventional firing process of the ceramic product, both in a quick cycle and in a slow cycle.

A glazing composition comprises, in its formulation, zinc borate along with a combination of oxides. Zinc borate, as the fundamental raw material, contributes $B_2O_3$ oxides and ZnO to the composition, in the corresponding stoichiometric proportions, rendering the use of ceramic frits unnecessary.

Zinc borate is present in a proportion of between 3.5% and 20.0% by weight in relation to the total weight and the combination of oxides is present in a proportion of between 80.0% and 96.5% by weight in relation to the total weight.

The combination of oxides, apart from those provided by zinc borate, includes fundamental oxides such as $SiO_2$, $Al_2O_3$, $R_2O$ ($R_2O$ referring to the group of alkaline oxides $Li_2O$, $Na_2O$, $K_2O$), RO (RO generically referring to group (II) oxides MgO, CaO, SrO, BaO), which can be incorporated into the glazing composition by mixing using raw materials available on the market, in order to modify its fusibility and gloss properties. Furthermore, additional oxides may be incorporated, selected from the group formed by ZnO, $ZrO_2$, $SnO_2$, $TiO_2$ y $P_2O_5$.

The combination of oxides is formed by $SiO_2$ in a proportion of between 52% and 84% by weight, $Al_2O_3$ in a proportion of between 3% and 15% by weight, $Li_2O$ + $Na_2O$ + $K_2O$ in a proportion of between 2% and 13% by weight, MgO + CaO + SrO + BaO in a proportion of between 5% and 20% by weight and additional oxides in a proportion of between 0% and 15% by weight, these percentages being expressed in relation to the total weight of the combination of oxides.

The manufacturing process includes mixing the components and milling the mixture, although optionally a heat treatment phase may be added between both. This heat treatment consists of exposing the mixture to a temperature that is lower than or equal to the characteristic sintering temperature of the corresponding composition, preferably for less than 2 hours.

An object of the present invention is the glaze ink prepared by milling, based on the said glazing composition whose formula consists of a solid part in a proportion of between 25% and 50% by weight, corresponding to the previously described fritless ceramic glaze, a dispersant in a proportion of between 1% and 15% by weight, and a solvent part, in a proportion of between 35% and 74% by weight, the solvents being able to be glycols, hydrocarbons or carboxylic esters.

## Advantages of the invention

Incorporating zinc borate flux, a crystalline product with very low water solubility, as the raw material providing $B_2O_3$ and ZnO instead of a glass frit, leads to a spectacular reduction in ink milling times as well as a much finer PSD, obtaining D97 values that are considerably lower than 0.9 $\mu$m, improving its filtering capacity (which can be determined as the filtering speed, ink flow, at a certain pressure, usually 2.5 bar, through a standard Teflon filter with a pore diameter of 5 $\mu$m) and its use in printheads that require inks of less than 1 $\mu$m.

Consequently, the new composition of the invention improves the state of the art by overcoming the problem of the low filtering capacity of current glaze inks that are based on glass frits; inks with a lower PSD are obtained, achieving a greater stability of the said inks over time, and milling efficiency is improved, so that the time required to achieve the target PSD is reduced with the consequent energy savings, whilst at the same time, greater stability and repeatability of the process is obviously achieved.

Also to be noted is the considerable reduction in the settling velocity of the ink, further improving its stability over time and its temperature stability.

Likewise, mention must be made to the fact that a much shorter milling time, such as that required in this glaze composition, also implies that the process is more stable and industrially reproducible, compared to the usual process based on frits, in which milling times are extraordinarily high and subject to incidents and to great differences and dispersion between lots, which in turn causes great commercial problems.

## Description of the figures

Figure -1- shows a simplified block diagram of the manufacturing process of the ceramic glaze composition, in which there is the phase (1) of mixing zinc borate with a combination of oxides, the phase (2) of heat treatment, and the phase (3) of milling the mixture obtained.

Figure -2- shows the simplified work diagram in relation to Example 1 of the invention, showing the identical chemical composition in oxides (4), fritting (with borax and zinc oxide) (5), mixing (with zinc borate) (6), water-based milling (7), drying (8), micronizing or dry milling (9), ink milling (10) and low-temperature heat treatments (11).

Figure -3- shows a graph of the evolution in the PSD (D97) of the inks tested according to specific work consumed for the 3 ink milling operations, T1, T2, and T3 of example 1.

Figure -4- shows a graph of the variation in gloss (12) according to the angle, for the gloss glaze ink T2, applied as described in example 2, at different printing resolutions (13) (in dots per inch) and the background glaze without ink application (expressed as 0 resolution).

**Preferred embodiment of the invention**

The present invention relates to a composition for the manufacture of glaze ink, which gives rise to the obtainment of a clear gloss coating when it is used in a process of decorating ceramic objects, that consists of the following phases:

- Conventional glazing of the ceramic product
- Inkjet decoration (by injection of ink) using the glaze ink of the invention.
- Completion with a conventional firing process.

Disclosed is thus a ceramic glaze composition that is fritless and hence made by mixing and directly milling the components, which comprises as the fundamental raw material in its formula, zinc borate which, because of its $B_2O_3$ and ZnO content, affords the glaze the necessary fusibility to ensure that after firing, a glassy, glossy, clear and homogeneous coating, without crystallizations or unmelted particles is obtained. Furthermore, the composition for the glaze ink contains a combination of oxides providing the rest of the oxides of the said glassy coating. This combination of oxides is composed of fundamental oxides chosen from the group formed by: $SiO_2$, $Al_2O_3$, $Li_2O$, $Na_2O$, $K_2O$, MgO, CaO, SrO, BaO, and by additional oxides chosen from the group formed by: ZnO, $ZrO_2$, $SnO_2$, $TiO_2$, $P_2O_5$, etc.

In a particularly preferred embodiment of the invention, the glaze composition contains zinc borate in a proportion of between 3.5% and 20% by weight in relation to the total weight of the composition. The combination of oxides involved in the composition, apart from those provided by the zinc borate, is between 80.0% and 96.5% by weight in relation to the total weight of the composition and it is prepared by mixing, using suitable non-vitreous raw materials, within the interval of the composition in oxides, expressed as a % by weight, according to table 1.

**Table 1. Range of the combination of oxides**

| Oxides | % by weight* |
|---|---|
| $SiO_2$ | 52 - 84 |
| $Al_2O_3$ | 3 - 15 |
| $Li_2O$ + $Na_2O$ + $K_2O$ | 2 - 13 |
| MgO + CaO + SrO + BaO | 5 - 20 |
| Other additional oxides | 0 - 15 |
| *referring to the total weight of the combination of oxides | |

As indicated in 0, in addition to those expressly mentioned, the combination of oxides may contain other additional oxides: ZnO, $ZrO_2$, $SnO_2$, $TiO_2$, $P_2O_5$, etc., always in a total content (expressed in % by weight) of less than 15% of the total of said composition. Note that among these minority oxides ZnO is indicated. This alternative input of ZnO should be considered as separate and additional to that provided as part of the zinc borate of the total composition.

This ceramic glaze composition has a characteristic production process, as seen in figure -1-, which comprises a first phase (1) of mixing zinc borate with a combination of oxides and a second phase (3) of milling the mixture obtained. Optionally, between both phases, a phase (2) of heat treatment can be carried out in order to sinter the different components into a homogeneous whole, improving the performance of the subsequent milling as ink. This phase (2) of heat treatment consists of exposing the mixture to a temperature that is lower than or equal to the characteristic sintering temperature of the corresponding composition. Preferably, this exposure will last for less than 2 hours.

An object of the present invention is the ink prepared by milling, based on the previously defined glaze composition and whose formula consists of a solid part, corresponding to the composition of zinc borate plus a combination of oxides (heat-treated or not), one or several dispersants and a solvent part (in which the solvents can be chosen from among glycols, hydrocarbons and carboxylic esters), according to the following composition expressed in % by weight, table 2:

### Table 2. Range of ink compositions

| Component | % (by weight) |
|---|---|
| Solid part (Zinc borate + combination of oxides) | 25 - 50 |
| Dispersant(s) and stabilizer(s) | 1 - 15 |
| Solvent(s) | 35 - 74 |

Due to the absence of frits in the composition of the solid part, the milled ink reaches an ink particle size distribution that is determined by a value of D97<0,90 $\mu$m, making it apt for all kinds of printheads of the type used in the decoration of ceramic products.

It has been demonstrated that, compared to the behaviour of inks prepared by milling frits, when compositions of zinc borate and fritless raw materials are used in accordance with the previously specified ranges, they are much easier to mill (in the ink preparation process as a solvent-based suspension), allowing much finer particle size distributions (PSD) to be obtained.

Thus, compared to inks prepared by milling frits, with D90 < 1 $\mu$m (that, consequently, could contain up to 10% of particles above 1 $\mu$m), those obtained according to the present invention, without frit, attain, as indicated, values of D97 < 0.90 $\mu$m, which practically guarantees the total absence of particles above 1 $\mu$m. Likewise the ink's settling velocity is considerably reduced which improves its stability over time.

Another further advantage of the invention is the spectacular reduction in the ink milling time. This reduction in time means that a much narrower PSD can be obtained, that is to say, one with less width value. Thus, the ink will have a much lower concentration of fine particles, which will prevent its tendency to re-aggregate, the caking of the solid component and, hence, loss of filterability (which can be determined as the filtering speed, ink flow, at a certain pressure, usually 2.5 bar, through a standard Teflon filter with a pore size of 5$\mu$m). A much shorter milling time also implies that the process is more stable and reproducible, compared to the usual process based on frits in which milling times are extraordinarily high and subject to incidents and to differences between lots.

Therefore, by means of the new composition of the invention, without frit (whether heat-treated or not), the state of the art is improved by overcoming the technical problem of the difficulty in milling ink based on frits; the efficiency of milling is improved, reducing the time required to reach the target PSD, and the viscosity of the ink is reduced, which enables the concentration of solids in the ink to be increased and the end result to be optimized.

In so far as the process of decoration of ceramic objects is concerned, it is described by the following phases:

- A phase of glazing over a ceramic base which is not the object of the present invention as it is carried out by means of a conventional process (either bell, airbrush, rotary, disc or waterfall, etc), using for this purpose any type of glaze suitable for the base and firing cycle.

- The phase of decorating with the ink of the present invention, which is preferably carried out using an injection head of those commonly used in ceramic decoration.

- Phase of firing the decorated ceramic product that is carried out by means of a normal cycle adapted to the requirements of the ceramic base used, which may range from traditional double firing at 900ºC to high-temperature porcelain stoneware firing at 1300ºC, it being possible to use both in traditional slow cycles of up to 24 hours from cold to cold, and in the most modern firing cycles that have a total duration of even less than half an hour.

As already indicated, the use of frit (both in glazes and inks) had become standard practice in the manufacture of ceramic products in quick firing cycles because it leads to an optimal homogeneity of the glaze and thus, a much quicker reaction. Surprisingly, the new ink of the invention, in spite of being a mixture of raw materials and not containing frit in its composition, leads to (by means of the described decoration process) a perfectly glossy, clear and homogeneous finish when it is used in the manufacture of ceramic tiles in quick firing cycles. The result is interpreted based on the physical characteristics of the manufactured ink. Indeed, compared to the traditional glazes prepared with mixtures of raw materials whose PSD reached higher levels, around D97 = 45 $\mu$m and which therefore required long firing cycles to obtain an adequate reaction between components, the ink of the invention has a D97< 0.90 $\mu$m, and thus the reactivity of the particles that form it is much higher, allowing the chemical reaction to take place in the short firing interval of quick firing cycles.

A technical expert will easily comprehend that the characteristics of different embodiments can be combined with the characteristics of other possible embodiments, provided that the combination is technically possible.

**Examples**

**Example 1. Ink milling in a continuous mill**

In order to determine the effect of replacing frit with zinc borate and other raw materials, 3 milling operations were prepared in a continuous mill with recirculation, carried out in each case with 0.3-0.4 mm diameter Ce-Y balls.

For reference purposes, a frit F1 according to the chemical composition expressed in % by weight of oxides of table 3 was melted employing a melting temperature of 1550 ºC.

**Table 3. Chemical composition expressed in % by weight of oxides, of the solid component of the glaze ink prepared with frit**

| Oxide | F1 |
|---|---|
| $SiO_2$ | 59.54 |
| $ZrO_2$ | 1.26 |
| $B_2O_3$ | 7.12 |
| $Al_2O_3$ | 9.26 |
| $Na_2O$ | 2.92 |
| $K_2O$ | 3.56 |
| MgO | 0.31 |
| CaO | 10.11 |
| ZnO | 5.65 |

Prior to being milled as ink, this frit was wet-milled in water to a PSD with D90 < 15 $\mu$m, followed by drying and micronization by dry-milling, yielding the corresponding powdered frit, M1, apt for incorporating in the milling of the ink.

Furthermore, a mixture Z2 was prepared with the same chemical composition in oxides as the F1 frit, but this time frit-free, using solely a mixture of zinc borate and other suitable raw materials. The zinc borate used was specifically the Borax brand FIREBRAKE ZB (chemical formula $2ZnO \cdot B_2O_3 \cdot 3.5H_2O$), the formula of the composition used being, in terms of raw materials, that indicated in table 4, expressed as % by weight of the raw materials.

**Table 4. Chemical composition expressed in % by weight of raw materials of the solid component of the fritless ink**

| Raw material | Z2 |
|---|---|
| Zinc borate (FIREBRAKE ZB) | 14.40 |
| Nepheline | 23.20 |
| Wollastonite | 21.60 |
| Quartz | 18.50 |
| Potassium feldspar | 20.40 |
| Zircon | 1.90 |

This composition was mixed, Z2, and micronized by dry milling, giving rise to the corresponding fritless powdered glaze, M2, apt to be incorporated in the milling of the ink.

Thirdly, using the same Z2 mixture of raw materials indicated in table 4, its sintering temperature was determined using a Camar Elettronica MicrOvis heating microscope, giving a value of 740ºC. Based on the sintering temperature value obtained, two samples, C3 and C4 were prepared (in both cases from the Z2 mixture of raw materials) by heat treatment according to the cycle indicated in table 5:

**Table 5. Heat cycles used for samples C3 and C4**

| Heat cycle parameters | C3 | C4 |
|---|---|---|
| Maximum temperature (°C) | 700 | 740 |
| Permanence at maximum temperature (min.) | 10 | 10 |

Given that the C4 test had an excessively compact appearance, which made spraying the product difficult, only C3 was selected to continue the experiment, treated at 700ºC (note that this is a much lower temperature than the fritting temperature of the F1 test: 1520ºC), micronizing it by dry milling to produce the corresponding M3 powdered glaze.

Finally, the 3 micronized compositions, M1, M2 and M3 were milled as ink, using for this purpose the formulas in table 6, yielding the respective T1, T2 and T3 inks. For the purpose of clarification, figure -2- shows the diagram of references and processes of the example

**Table 6. Formula of the inks, expressed in % by weight**

| Component | T1 | T2 | T3 |
|---|---|---|---|
| M1 test | 45.00 | | |
| M2 test | | 45.00 | |
| M3 test | | | 45.00 |
| Dispersant | 10.00 | 10.00 | 10.00 |
| Solvent | 45.00 | 45.00 | 45.00 |

Time-based data of the three milling operations were taken, both of the PSD (D97 [$\mu$m]) and specific energy consumption in relation to the weight of the milled solid (W/M [kWh/kg]). The target in the 3 cases was to reach a value of D97 < 1 $\mu$m.

As can be seen from the graph in figure -3-, in the T1 milling carried out with F1 frit the target of D97 < 1 $\mu$m was not achieved and it was felt that milling stabilised without lowering the PSD so that in the improbable event of the target being reached, specific consumption would be extraordinarily high. This is related to the fact that frits seem to behave in an elastic way when they reach sizes of around 1 $\mu$m, which makes them very difficult to mill. For this reason, after a long milling process, particle distribution parameter values of $D_{97}$ < 2 $\mu$m are barely reached, obliging non-standard printheads to be used. Moreover, the filtering capacity of the inks is very limited which may give rise to problems during their use in printheads. Furthermore, as a small enough PSD is not achieved, the settling velocity increases, and this means that the degradation of the ink over time is notably higher than that of pigment inks.

However, in the T2 milling, prepared using the fritless M2 sample, the pursued objective was achieved, as can be seen in the same figure -3-, with a specific consumption of 2.4 kWh/kg of solid.

Finally, with the T3 ink prepared from the heat-treated test, C3, the target was also amply achieved, even though the work required was greater than in the case of the T2 ink, although it is also true that the D97 value obtained is lower than that of the T2 ink so that the milling time and specific energy consumption could be reduced.

Table 7 shows the PSD results of the T1, T2 and T3 inks at the end of the corresponding millings, including width, $W_{PSD}$ calculated according to equation (1), indicating that the PSD width of tests T2 and T3 is much narrower than that of test T1

**Table 7. PSD of inks**

| PSD parameter | T1 | T2 | T3 |
|---|---|---|---|
| D10 ($\mu$m) | 0.49 | 0.43 | 0.40 |
| D50 ($\mu$m) | 0.69 | 0.59 | 0.54 |
| D90 ($\mu$m) | 1.04 | 0.81 | 0.73 |
| D97 ($\mu$m) | 1.34 | 0.90 | 0.81 |
| $W_{PSD}$ | 0.80 | 0.63 | 0.61 |

According to these data, both the T2 ink and the T3 ink, with PSD below 1 $\mu$m are very stable both to settling over time and re-aggregation, thus prolonging their useful life compared to the original T1 ink prepared with frit.

**Example 2. Manufacture of ceramic tiles with gloss-matt contrast effect decorated using a fritless zinc borate and raw materials ink.**

Red ceramic stoneware paving tiles were glazed using a matt glaze of a composition suitable for their use, with an applied weight of approximately 350 g/m$^2$. Subsequently the T2 ink was applied over them, using a standard DIMATIX 1024 M printhead at different design resolutions, from 400 to 1800 dpi.

After firing in a standard stoneware single-firing cycle at 1140ºC, for a total time of 40 minutes, the tiles were found to have a matt appearance in the non-decorated zone while in the zones decorated with the T2 glaze ink, an increase in gloss was obtained with the gradual increase in the design resolution, and thus, in the weight of ink applied. To quantify the change in appearance, a multi-angle glossmeter was used, measuring the gloss of the tiles at different angles (20º, 60º and 85º), figure -4-, both on the part decorated with ink (varying the printing resolution in dots per inch [dpi], and on the zone to which only the glaze was applied (indicated in the figure as 0 resolution). As can be seen in the graph, there is a notable increase in gloss in the zone in which the ink is applied (at the three measurement angles), as the resolution of the ink applied is increased.

All of the information referring to examples or embodiments, including the tables, form part of the description of the invention.

**Claims**

1. Ink for clear ceramic coatings, prepared by milling, based on a fritless ceramic glaze composition comprising zinc borate together with a combination of oxides, wherein its formula consists of a solid part in a proportion of between 25% and 50% by weight, corresponding to the fritless ceramic glaze composition, a dispersant in a proportion of between 1% and 15% by weight, and a solvent part, in a proportion of between 35% and 74% by weight, and wherein the ink has a particle size distribution **characterised by** a value of D97 < 0.90 $\mu$m.

2. Ink for clear ceramic coatings, according to the preceding claim, wherein the solvents are chosen from the group formed by glycols, hydrocarbons and carboxylic esters.

3. Ink for clear ceramic coatings, according to the preceding claims, wherein the ceramic glaze composition comprises zinc borate in a proportion of between 3.5% and 20.0% by weight in relation to the total ceramic glaze composition.

4. Ink for clear ceramic coatings, according to the preceding claims, wherein the ceramic glaze composition comprises the combination of oxides in a proportion of between 80.0% and 96.5% by weight in relation to the total ceramic glaze composition.

5. Ink for clear ceramic coatings, according to the preceding claims, wherein the combination of oxides comprises fundamental oxides chosen from the group formed by $SiO_2$, $Al_2O_3$, $Li_2O$, $Na_2O$, $K_2O$, MgO, CaO, SrO and BaO, and additional oxides chosen from the group formed by ZnO, $ZrO_2$, $SnO_2$, $TiO_2$ and $P_2O_5$.

6. Ink for clear ceramic coatings, according to the preceding claims, wherein the combination of oxides is formed by $SiO_2$ in a proportion of between 52% and 84% by weight, $Al_2O_3$ in a proportion of between 3% and 15% by weight, $Li_2O + Na_2O + K_2O$ in a proportion of between 2% and 13% by weight, MgO + CaO + SrO + BaO in a proportion of between 5% and 20% by weight and additional oxides in a proportion of between 0% and 15% by weight, these percentages being expressed in relation to the total weight of the combination of oxides.

7. Ink for clear ceramic coatings, according to the preceding claims, wherein the ceramic glaze composition has been obtained by mixing zinc borate with a combination of oxides in a first phase (1) and milling the mixture obtained in a second phase (3).

8. Ink for clear ceramic coatings, according to claim 7, wherein the ceramic glaze composition has been obtained by performing a heat treatment in a phase (2) between the phase (1) of mixing and the phase (3) of milling, the phase (2) consisting of exposing the mixture to a temperature below or equal to the characteristic sintering temperature of the corresponding composition.

9. Ink for clear ceramic coatings, according to claim 8, wherein the phase (2) of heat treatment lasts for less than 2 hours.

10. Use of a fritless ceramic glaze composition as defined in any of claims 1 to 9 for the decoration of ceramic objects.

11. Manufacturing process of a ceramic glaze composition as defined in any of claims 1 to 9, **wherein** in a first phase (1) zinc borate is mixed with a combination of oxides and in a second phase (3) the mixture obtained is milled.

**Patentansprüche**

1. Tinte für klare, keramische Beschichtungen, welche durch Mahlen auf der Grundlage einer frittefreien, keramischen Glasurzusammensetzung zubereitet wird, welche Zinkborat zusammen mit einer Kombination von Oxiden aufweist, wobei ihre Formel aus einem festen Bestandteil in einem Verhältnis von zwischen 25 Gew.-% und 50 Gew.-%, welcher der frittefreien, keramischen Glasurzusammensetzung entspricht, einem Dispergiermittel in einem Verhältnis von zwischen 1 Gew.-% und 15 Gew.-% und einem Lösungsmittel-Bestandteil in einem Verhältnis von zwischen 35 Gew.-% und 74 Gew.-% besteht, und wobei die Tinte eine Teilchengrößenverteilung aufweist, welche durch einen Wert von D97 < 0,90 $\mu$m gekennzeichnet ist.

2. Tinte für klare, keramische Beschichtungen nach dem vorhergehenden Anspruch, wobei die Lösungsmittel aus der Gruppe ausgewählt werden, welche von Glykolen, Kohlenwasserstoffen und Karbonsäureestern gebildet wird.

3. Tinte für klare, keramische Beschichtungen nach den vorhergehenden Ansprüchen, wobei die keramische Glasurzusammensetzung aus Zinkborat in einem Verhältnis von zwischen 3,5 Gew.-% und 20,0 Gew.-% in Bezug auf die gesamte keramische Glasurzusammensetzung besteht.

4. Tinte für klare, keramische Beschichtungen nach den vorhergehenden Ansprüchen, wobei die keramische Glasurzusammensetzung die Kombination von Oxiden in einem Verhältnis von zwischen 80,0 Gew.-% und 96,5 Gew.-% in Bezug auf die gesamte keramische Glasurzusammensetzung aufweist.

5. Tinte für klare, keramische Beschichtungen nach den vorhergehenden Ansprüchen, wobei die Kombination von Oxiden grundlegende Oxide, welche aus der Gruppe ausgewählt werden, welche von $SiO_2$, $Al_2O_3$, $Li_2O$, $Na_2O$, $K_2O$, MgO, CaO, SrO und BaO gebildet wird, und zusätzliche Oxide aufweist, welche aus der Gruppe ausgewählt werden, welche von ZnO, $ZrO_2$, $SnO_2$, $TiO_2$ und $P_2O_5$ gebildet wird.

6. Tinte für klare, keramische Beschichtungen nach den vorhergehenden Ansprüchen, wobei die Kombination von Oxiden von $SiO_2$ in einem Verhältnis von zwischen 52 Gew.-% und 84 Gew.-%, $Al_2O_3$ in einem Verhältnis von zwischen 3 Gew.-% und 15 Gew.-%, $Li_2O$ + $Na_2O$ + $K_2O$ in einem Verhältnis von zwischen 2 Gew.-% und 13 Gew.-%, MgO + CaO + SrO + BaO in einem Verhältnis von zwischen 5 Gew.-% und 20 Gew.-% und zusätzliche Oxide in einem Verhältnis von zwischen 0 Gew.-% und 15 Gew.-% gebildet wird, wobei diese Prozentsätze in Bezug auf das Gesamtgewicht der Kombination von Oxiden ausgedrückt sind.

7. Tinte für klare, keramische Beschichtungen nach den vorhergehenden Ansprüchen, wobei die keramische Glasurzusammensetzung durch Vermischen von Zinkborat mit einer Kombination von Oxiden in einer ersten Phase (1) und Mahlen der gewonnenen Mischung in einer zweiten Phase (3) gewonnen wird.

8. Tinte für klare, keramische Beschichtungen nach Anspruch 7, wobei die keramische Glasurzusammensetzung durch Durchführen einer Wärmebehandlung in einer Phase (2) zwischen der Phase (1) des Vermischens und der Phase (3) des Mahlens gewonnen wird, wobei die Phase (2) daraus besteht, die Mischung einer Temperatur unterhalb oder gleich der charakteristischen Sintertemperatur der entsprechenden Zusammensetzung auszusetzen.

9. Tinte für klare, keramische Beschichtungen nach Anspruch 8, wobei die Phase (2) der Wärmebehandlung weniger als 2 Stunden dauert.

10. Verwendung einer frittefreien, keramischen Glasurzusammensetzung, wie sie in einem der Ansprüche 1 bis 9 definiert ist, für die Dekoration von keramischen Objekten.

11. Herstellungsverfahren einer keramischen Glasurzusammensetzung, wie sie in einem der Ansprüche 1 bis 8 definiert ist, **wobei** in einer ersten Phase (1) Zinkborat mit einer Kombination von Oxiden vermischt wird und in einer zweiten Phase (3) die gewonnene Mischung gemahlen wird.

**Revendications**

1.  Encre pour revêtements céramiques transparents préparée par broyage, sur la base d'une composition d'émail céramique sans frittes comprenant du borate de zinc avec une combinaison d'oxydes, étant précisé que sa formule comprend une part solide dans une proportion comprise en 25% et 50% en poids, correspondant à la composition d'émail céramique sans frittes, un dispersant dans une proportion comprise en 1% et 15% en poids et une partie solvant, dans une proportion comprise en 35% et 74% en poids, et étant précisé que l'encre présente une distribution granulométrique **caractérisée par** une valeur de D97<0,90 μm.

2.  Encre pour revêtements céramiques transparents selon la Revendication précédente étant précisé que les solvants sont choisis dans le groupe formé par les glycols, les hydrocarbures et les esters carboxyliques.

3.  Encre pour revêtements céramiques transparents selon les Revendications précédentes étant précisé que la composition d'émail céramique comprend du borate de zinc dans une proportion comprise en 3,5% et 20,0% en poids par rapport à la composition d'émail céramique totale.

4.  Encre pour revêtements céramiques transparents selon les Revendications précédentes étant précisé que la composition d'émail céramique comprend la combinaison d'oxydes dans une proportion comprise en 80,0% et 96,5% en poids par rapport à la composition d'émail céramique totale.

5.  Encre pour revêtements céramiques transparents selon les Revendications précédentes étant précisé que la composition d'oxydes comprend les oxydes fondamentaux choisis dans le groupe formé par $SiO_2$, $Al_2O_3$, $Li_2O$, $Na_2O$, $K_2O$, MgO, CaO, SrO et BaO, et des oxydes additionnels choisis dans le groupe formé par ZnO, $ZrO_2$, $SnO_2$, $TiO_2$ et $P_2O_5$.

6.  Encre pour revêtements céramiques transparents selon les Revendications précédentes étant précisé que la composition d'oxydes est formée par $SiO_2$ dans une proportion comprise entre 52% et 84% en poids, $Al_2O_3$ dans une proportion comprise entre 3% et 15% en poids, $Li_2O + Na_2O + K_2O$ dans une proportion comprise entre 2% et 13% en poids, MgO + CaO + SrO + BaO dans une proportion comprise entre 5% et 20% en poids et des oxydes additionnels dans une proportion comprise entre 0% et 15% en poids, ces pourcentages étant exprimés par rapport au poids total de la combinaison d'oxydes.

7.  Encre pour revêtements céramiques transparents selon les Revendications précédentes étant précisé que la composition d'émail céramique est obtenue en mélangeant du borate de zinc avec une combinaison d'oxydes dans une première phase (1) et en broyant le mélange obtenu dans une seconde phase (3).

8.  Encre pour revêtements céramiques transparents selon la Revendication 7 étant précisé que la composition d'émail céramique est obtenue en effectuant un traitement thermique dans une phase (2) entre la phase (1) de mélange et la phase (3) de broyage, la phase (2) prévoyant l'exposition du mélange à une température inférieure ou égale à la température de frittage de la composition correspondante.

9.  Encre pour revêtements céramiques transparents selon la Revendication 8 étant précisé que la phase (2) de traitement thermique dure moins de 2 heures.

10. Utilisation d'une composition d'émail céramique sans frittes telle que définie dans l'une quelconque des Revendications 1 à 9 pour la décoration d'objets en céramique.

11. Procédé de fabrication d'une composition d'émail céramique telle que définie dans l'une quelconque des Revendications 1 à 9, **étant précisé que,** dans une première phase (1), du borate de zinc est mélangé avec une combinaison d'oxydes et que, dans une deuxième phase (3), le mélange est broyé.

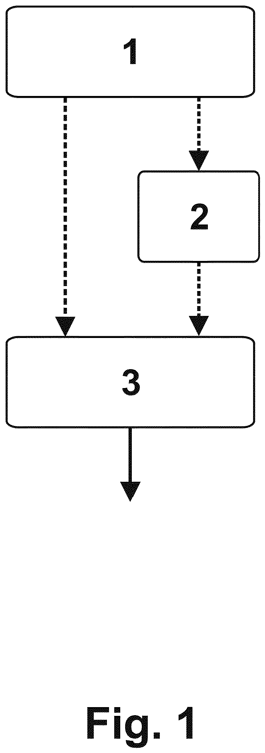

Fig. 1

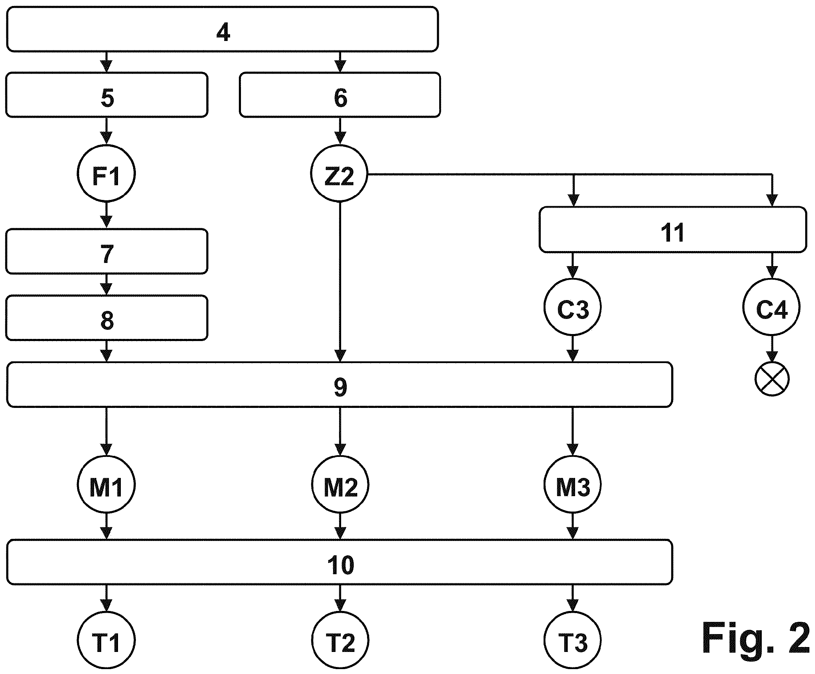

Fig. 2

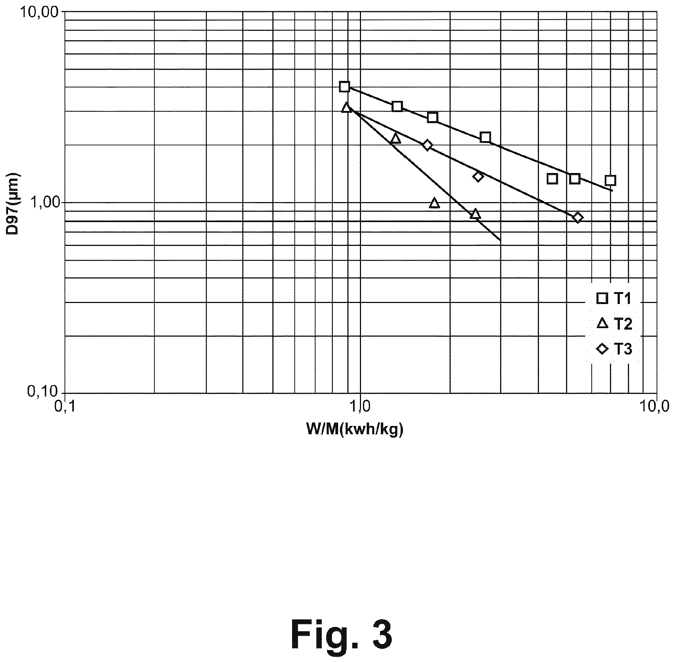

**Fig. 3**

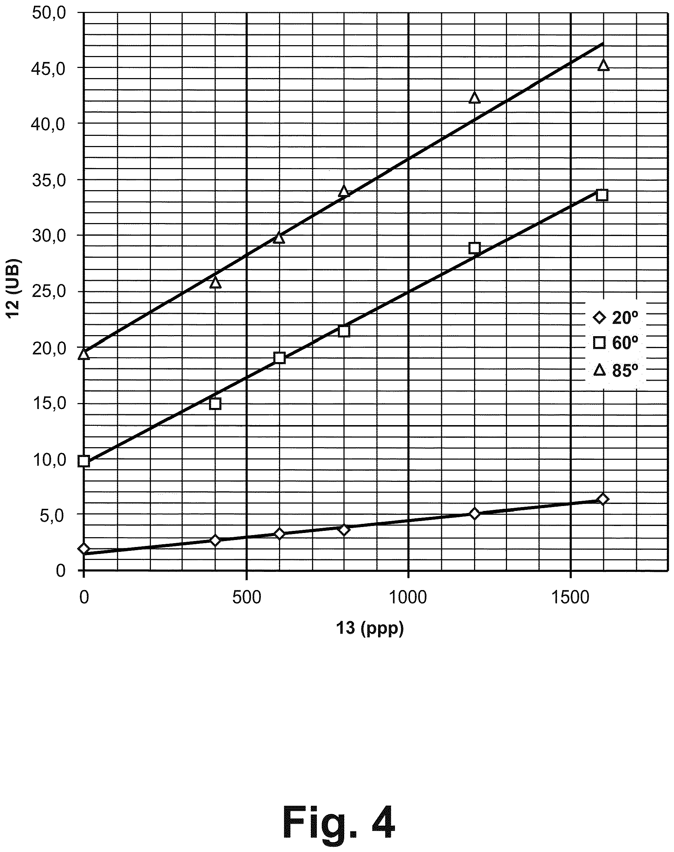

## Fig. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5753685 A
- EP 1272574 A
- ES 2131466
- ES 2289916
- US 20130265376 A
- WO 2014072553 A

**Non-patent literature cited in the description**

- **JACKSON W M.** *American Ceramic Society Bulletin,* 1989, vol. 68, 87